# FASCICULE DE BREVET EUROPEEN

(11) **EP 1 637 253 B1**
(45) Date de publication et mention de la délivrance du brevet: **15.10.2008**
(21) Numéro de dépôt: 05108687.4
(22) Date de dépôt: 21.09.2005
(51) Int. Cl.: B22C 9/10, B22C 9/04, F01D 5/18, F01D 9/02

(54) **Procédé de fabrication d'une aube de turbomachine, assemblage de noyaux pour la mise en oeuvre du procédé**
Verfahren zur Herstellung einer Turbinenschaufel und Kernpaket zur Verwendung in dem Verfahren
Process of fabricating a turbine blade and core assembly to be used in the process

(30) Priorité: 21.09.2004 FR 0452111
(43) Date de publication de la demande: 22.03.2006
(73) Titulaire: SNECMA, 75015 Paris (FR)
(72) Inventeur: Judet, Maurice, Guy, 77190, Dammarie Les Lys (FR)
(74) Mandataire: David, Daniel

(56) Documents cités:
- EP-A- 1 106 280
- US-A- 5 951 256
- US-B1- 6 347 660

## Description

La présente invention concerne le domaine des turbines, en particulier celui des turbines de moteurs à turbine à gaz, et vise la fabrication par moulage à cire perdue d'aubes mobiles ou fixes, comprenant des cavités destinées à la circulation de fluides de refroidissement.

Les aubes mobiles ou fixes de turbine qui sont soumises à des contraintes thermiques élevées comprennent des moyens de refroidissement par circulation d'un fluide caloporteur, généralement de l'air dans le cas d'un moteur à turbine à gaz, à l'intérieur de cavités ménagées à l'intérieur de la pale.

Par ailleurs les aubes refroidies de turbines sont maintenant généralement fabriquées par moulage à cire perdue. Cette technique comprend plusieurs étapes. Une première étape consiste à réaliser un modèle en cire ou autre matériau provisoire équivalent, de la pièce que l'on veut mouler. On enveloppe ensuite, dans une deuxième étape, le modèle dans un moule carapace en céramique. Celui-ci est fabriqué par des trempages successifs du modèle dans des barbotines contenant une matière céramique alternant avec des opérations de stucage de la couche formée, entre chaque trempage. Lorsqu'il est formé, on sèche le moule et on élimine la cire qu'il contient par une première cuisson à une température adaptée puis on fait cuire le moule à une température élevée pour lui conférer la résistance nécessaire au coulage. Il reste alors l'image du modèle en creux dans laquelle on coule le métal en fusion. Après refroidissement, on casse le moule pour dégager la pièce. Celle-ci subit ensuite un simple traitement de finition.

Lorsque la pale comprend des cavités pour la circulation du fluide de refroidissement, il faut incorporer dans le modèle, avant la fabrication du moule carapace, un ou plusieurs noyaux. Cette phase du procédé comprend d'abord la fabrication séparée du ou des noyaux par moulage d'une matière céramique consolidée par un liant, leur assemblage, le cas échéant, et la mise en place du ou des noyaux dans un moule à cire. On moule ainsi ledit modèle par injection de cire dans le moule à cire. La cire remplit les espaces ménagés entre le noyau ou l'assemblage d'éléments de noyaux et le volume du moule à cire. Le modèle obtenu en cire forme la réplique de la pièce à fabriquer, avec cette différence que les cavités internes sont occupées par le ou les noyau(x).

Lors de l'étape de coulée de l'alliage, le métal en fusion s'écoule entre les parois du moule carapace et celles du noyau. On élimine, après un refroidissement approprié de l'alliage, le moule carapace d'une part et les éléments constituant le noyau pour obtenir la ou les cavités d'autre part. La pièce subit en fin de procédé un simple traitement de finition.

La technique présentée ci-dessus permet la réalisation de pièces avec des géométries internes complexes. La demande de brevet au nom de la demanderesse, FR 0 309 535 déposée le 1 août 2003, décrit une aube de turbine présentant plusieurs circuits de refroidissement, un premier le long d'une cavité centrale, des cavités intrados et des cavités extrados de la pale, un deuxième indépendant du premier circuit le long du bord d'attaque de l'aube et un troisième indépendant des deux premiers le long du bord de fuite de l'aube.

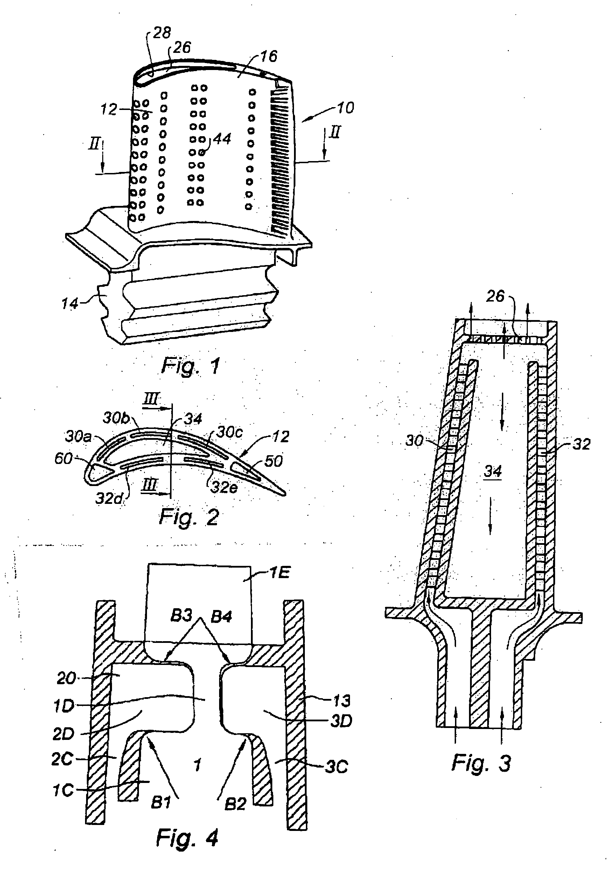

Une aube 10 de turbine haute pression de moteur à turbine à gaz est représentée sur les figures 1 et 2. L'aube comporte une surface aérodynamique 12 désignée pale qui s'étend en direction radiale entre un pied 14 et un sommet d'aube 16. Le pied est conformé de manière à permettre le montage de l'aube sur un disque de rotor. Le sommet de l'aube présente ici une partie dite en forme de baignoire 28 ; elle est constituée d'un fond 26 transversal à la pale et d'une paroi formant son bord dans le prolongement de la paroi de la pale 12.

La figure 2 montre la pale vue en coupe légèrement agrandie selon la direction II - II de la figure 1. Ici la pale 12 comprend une pluralité de cavités. Une première cavité est centrale 34 et s'étend du pied jusqu'au sommet de la pale. Trois cavités 30 sont disposées le long de la paroi de l'extrados entre la cavité centrale 34 et la paroi extrados, le long de cette dernière. Les cavités 30 sont minces et placées l'une derrière l'autre le long de cette paroi. Deux cavités 32 sont disposées entre la cavité centrale et la paroi intrados le long de cette dernière. Elles sont également minces. Une cavité 50 est située dans la partie de l'aube près du bord de fuite. Une cavité 60 est située dans la partie de l'aube près du bord d'attaque.

La figure 3 montre une vue de l'aube en coupe selon la direction III-III de la figure 2. L'air de refroidissement circule d'abord le long des cavités intrados et extrados puis est guidé vers la cavité centrale pour être évacué par des ouvertures ménagées de manière appropriée. Un ou deux circuits différents alimentent en air les deux cavités 50 et 60.

Pour la fabrication d'une pièce présentant une telle structure, par moulage, on réalise des noyaux correspondant aux différentes cavités, soit un premier noyau 1 dont la forme correspond à celle de la première cavité, un deuxième noyau 2 dont la forme correspond aux trois cavités 30 extrados et un troisième noyau 3 dont la forme correspond aux deux cavités intrados 32. On réalise aussi des noyaux pour les cavités 50 et 60. Cependant dans la suite de la présentation on ne prendra en considération que les trois premières cavités avec leurs noyaux associés dans la mesure où elles forment un seul circuit de refroidissement.

On a représenté, sur la figure 4, une vue partielle du sommet de la pièce en l'état où elle se trouve après le refroidissement du métal. On la voit en coupe selon la direction radiale, après que le moule carapace a été enlevé. Les cavités ménagées à l'intérieur de la paroi 13 de l'aube sont occupées par les noyaux 1, 2 et 3 assemblés qu'il s'agit de supprimer.

On remarque que les trois noyaux ont été réalisés de façon à pouvoir constituer un assemblage rigide pendant les opérations de moulage. Il est en effet important que les différents éléments restent en place, et ne soient pas perturbés notamment pendant la coulée du métal en fusion. Comme on le voit sur la figure 4, les trois noyaux s'emboîtent dans la zone du sommet de l'aube, à l'endroit où un passage doit être ménagé entre les trois cavités. Ils forment à cet endroit un ensemble compact rigide. Le noyau 1 central comporte une partie formant le corps 1C correspondant à la cavité centrale 34, une partie amincie 1D et une partie de tête 1E plus large. La hauteur de la partie amincie 1D correspond sensiblement à la hauteur du passage prévu entre les cavités ; le noyau 2 comprend une partie formant le corps 2C ici en trois parties correspondant aux trois cavités extrados 30a, 30b, 30c. Ces trois parties 2C sont reliées au niveau du sommet de l'aube à un élément 2D venant s'insérer entre les parties 1C et 1E du noyau 1, en appui contre la partie 1D. De même le noyau 3 comprend une partie formant un corps 3C en deux éléments correspondants aux deux cavités intrados 32a et 32b. Ces deux éléments sont reliés par un élément 3D au niveau du sommet de l'aube qui vient s'insérer entre les parties 1C et 1E du noyau 1 en appui contre la partie 1D. Cet assemblage permet la fabrication de l'aube par coulée du métal en fusion entre le moule carapace et les noyaux, en ménageant les cavités et passages désirés.

Cependant, comme on le voit sur la figure 4, dans la pratique un espace interstitiel subsiste entre les parties des noyaux ainsi assemblées. Le métal en fusion vient occuper l'espace laissé par ces parties. Il s'ensuit qu'après disparition des noyaux, il subsiste les bavures B1 à B4. Ces bavures métalliques doivent être supprimées car elles sont le siège d'apparition de criques lors du fonctionnement de la machine sur laquelle la pièce est montée. Elles créent aussi des pertes de charge dans l'écoulement du fluide de refroidissement à l'intérieur de l'aube.

On procède donc à leur élimination par attaque chimique ou mécanique. Ces opérations sont longues et délicates ; elles sont d'un coût non négligeable. En outre, on doit ménager une ouverture relativement importante au niveau de la paroi transversale formant le fond de la baignoire, par laquelle on introduit l'outil pour procéder à la suppression des bavures. On ménage un bord le long de cette ouverture qui sert alors d'appui pour une plaquette d'obturation formant le fond de la baignoire. On a déjà constaté qu'en raison de l'importance de cette ouverture, la plaquette était susceptible de s'effondrer entraînant des perturbations importantes de fonctionnement.

La présente invention a donc pour objet un procédé de fabrication d'une aube mobile ou fixe de turbomachine évitant les inconvénients rapportés ci-dessus.

Conformément à l'invention le procédé de fabrication d'une aube de turbomachine selon la technique de moulage à cire perdue, l'aube comprenant une première cavité longitudinale, notamment centrale, et au moins une deuxième cavité longitudinale formant ensemble un circuit de refroidissement et communiquant entre elles à une extrémité longitudinale de l'aube par un canal transversal, le procédé comprenant l'étape de fabrication d'un premier et d'un deuxième noyaux correspondant auxdites cavités, les deux noyaux comportant chacun une portion d'extrémité par laquelle ils sont reliés l'un à l'autre, l'assemblage des deux noyaux étant ensuite mis en place dans un moule carapace et le métal coulé dans ledit moule, est caractérisé par le fait que les dites portions d'extrémités sont rendues solidaires l'une à l'autre par un assemblage de type tenon et mortaise, le tenon et la mortaise étant réalisés par usinage des dites portions d'extrémité.

Les noyaux sont obtenus par injection de matière céramique dans un moule approprié, les tolérances de fabrication ne permettent pas un assemblage sans interstices parasites dans lesquelles le métal s'insinue. Le procédé de l'invention, par l'usinage des parties à assembler, garantit une précision réduisant lesdits interstices. L'usinage est réalisé mécaniquement par tout outil approprié.

Par liaison à tenon et mortaise on désigne toute liaison mécanique entre les deux pièces par laquelle elles peuvent être retenues l'une par rapport à l'autre. De préférence, la liaison comporte au moins une partie femelle sur une pièce coopérant avec une partie mâle sur l'autre pièce. Ce sont ces parties, qui coopèrent dans la liaison mécanique, qui sont usinées pour permettre un ajustage précis entre elles.

Conformément à une autre caractéristique, on colmate, le cas échéant, les interstices résiduels, entre lesdites portions d'extrémité une fois assemblées, susceptibles d'engendrer des bavures de métal coulé. Le colmatage est effectué avantageusement avec une colle céramique.

Conformément à un mode de réalisation préféré, la mortaise ou partie femelle est formée par usinage dans la portion d'extrémité du premier noyau central. On usine un tenon dont la forme correspond à ladite mortaise dans la portion d'extrémité du deuxième noyau.

La liaison mécanique peut comprendre plusieurs parties formant des mortaises et des tenons correspondants.

Plus précisément, l'aube comportant au moins une troisième cavité longitudinale, les dites deuxièmes et troisièmes cavités étant disposées l'une entre la cavité centrale et la face extrados et l'autre entre la cavité centrale et la face intrados de la pale, le procédé comprend l'étape de fabrication d'un troisième noyau correspondant à la dite troisième cavité.

Conformément à un mode de réalisation particulier, au moins l'une des deuxième et troisième cavités est constituée d'au moins deux cavités parallèles formant deux portions parallèles du circuit de refroidissement, et le noyau correspondant comprend un nombre de branches parallèles identique au nombre de cavités parallèles.

Conformément à une autre caractéristique, les cavités communiquent entre elles par leur extrémité située du côté du sommet de l'aube.

L'invention porte également sur l'assemblage de noyaux en tant que tel pour la mise en oeuvre du procédé dont les différents noyaux sont reliés entre eux par une extrémité et comportant à l'autre extrémité des moyens pour le montage dans un moule.

L'invention sera mieux comprise et d'autres caractéristiques apparaîtront à la lecture de la description qui suit en regard des dessins annexés sur lesquels
- la figure 1 représente une aube de turbine vue en perspective,
- la figure 2 représente une coupe agrandie selon la direction II - II de la figure 1,
- la figure 3 représente une coupe agrandie selon la direction III - III de la figure 2,
- la figure 4 montre, vue en coupe longitudinale agrandie, une partie du sommet de la pale avant élimination des noyaux dans le procédé de l'art antérieur,
- la figure 5 montre, vu en perspective, l'assemblage des trois noyaux conforme à l'invention,
- la figure 6 montre le sommet du noyau central de la figure 5, seul et en perspective,
- la figure 7 montre le noyau extrados de la figure 5, seul et en perspective,
- la figure 8 montre plus en détail le sommet des noyaux de la figure 5,
- la figure 9 montre le noyau intrados de la figure 5 avec ses deux branches,
- la figure 10 montre l'ensemble complet du noyau, vu du côté intrados.

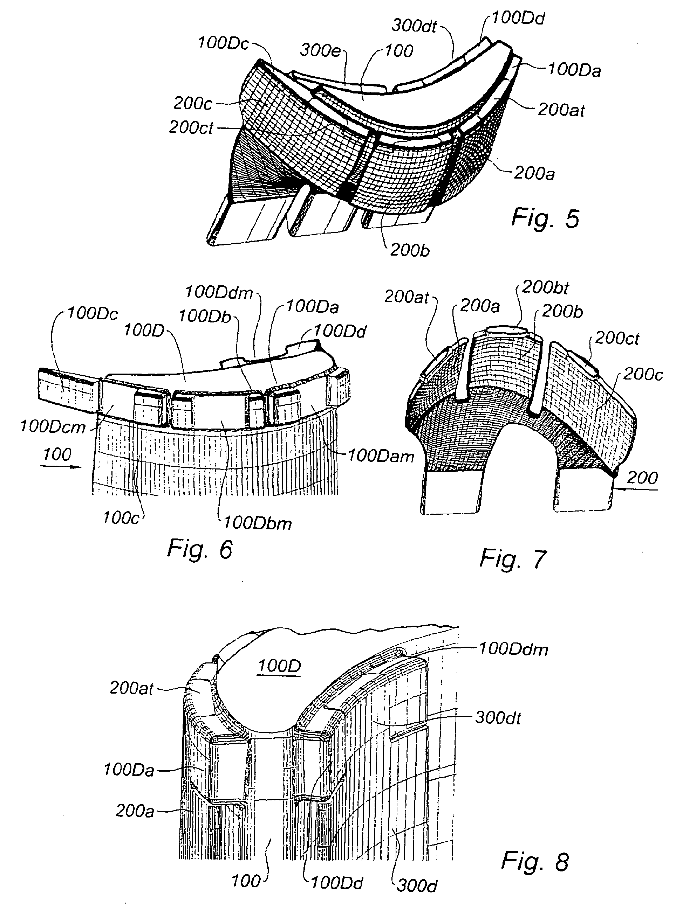

En se reportant aux figures 5 à 8 représentant l'assemblage de noyaux de l'invention, on voit la partie supérieure du noyau 100 avec un corps 100C et une portion d'extrémité 100D, voir la figure 6 en particulier. Le corps 100C du noyau a la forme de la cavité centrale 34 montrée sur la figure 1. La portion d'extrémité 100D est bordée, sur sa face extrados, par trois bourrelets 100Da 100Db et 100Dc, de dimensions déterminées par les dimensions des passages que l'on souhaite ménager entre la cavité centrale d'une part et chacune des trois cavités extrados 30a, 30b et 30c de l'aube d'autre part. Le bourrelet 100Da est près du bord d'attaque et le bourrelet 100Dc près du bord de fuite. Le noyau a été moulé par injection d'une matière céramique, appropriée pour cette application, dans un moule. On prépare ensuite le noyau 100 en usinant, dans chacun des trois bourrelets, une mortaise 100Dam, 100Dbm et 100Dcm respectivement, ouverte dans la direction parallèle à l'axe de l'aube. Avec des bord latéraux également dans cette direction.

On a représenté sur la figure 7 et en perspective, un noyau 200, ici extrados, avec trois branches 200a, 200b et 200c dont la forme de lame correspond pour chacune à une cavité d'extrados, 30a, 30b et 30c respectivement. La partie inférieure du noyau comporte des éléments venus de moulage et qui ont une fonction de tenue du noyau pendant les différentes opérations de formation de l'aube. Le sommet de chaque branche en lame comporte un tenon 200at, 200bt et 200ct respectivement, formant la portion d'extrémité du noyau 200. Les tenons ont été usinés dans le noyau venu de moulage, au moyen d'un outil approprié à la portée de l'homme de l'art. Les cotes des tenons sont ainsi précises.

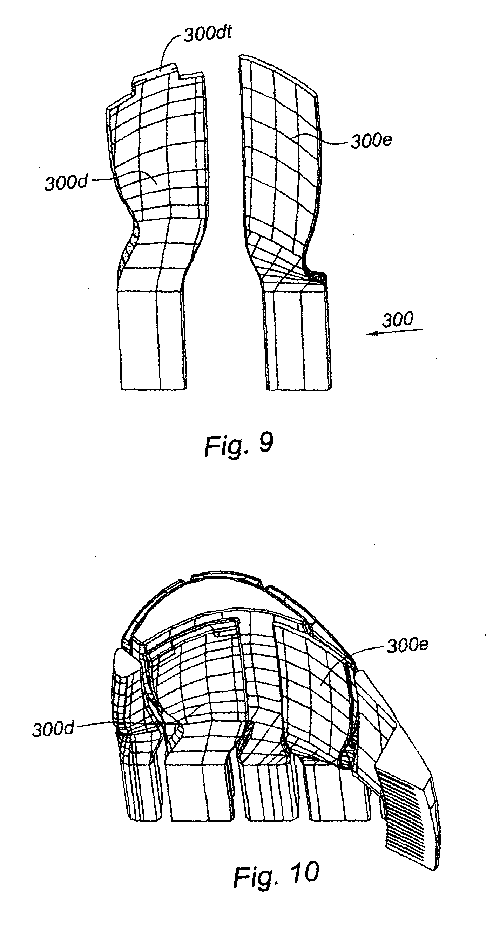

Pour l'exemple de réalisation selon l'aube de la figure 1 qui comprend aussi des cavités intrados 32d et 32e, on réalise un noyau 300 intrados avec deux branches 300d et 300e à la forme de ces cavités. Il a été représenté sur la figure 9. Comme pour le noyau 200, on a usiné un tenon 300dt sur au moins l'une des branches. Sur la figure 9, on voit que l'on a réalisé un tenon sur la branche 300d Corrélativement, le noyau 100 comprend un bourrelet 100Dd dans la partie d'extrémité 100D sur sa face intrados. Une mortaise 100Ddm a été usinée dans le bourrelet 100Dd, comme dans les bourrelets de la face extrados, pour recevoir le tenons ménagé sur le sommet d'au moins l'une des branches 300d et 300e du noyau 300.

Pour assembler les trois noyaux, on vient placer le noyau 200 du côté de la face extrados du noyau 100, en glissant les tenons, 200at, 200bt et 200ct respectivement dans la mortaise 100Dam, 100Dbm, 100Dcm, qui leur est associée. On place également le noyau 300 du côté de la face intrados du noyau 100 en glissant les tenons 300dt et 300et dans la mortaise du bourrelet qui lui est associé.

Le résultat de l'assemblage est montré globalement sur la figure 5 avec une vue partielle agrandie de la portion d'extrémité sur la figure 8. Sur cette dernière figure, on voit que des zones restent à colmater pour obtenir une surface aussi continue que possible sans espace résiduel. Par exemple, sur la réalisation montrée sur cette figure, le tenon 300dt, usiné sur le sommet de la branche 300d du noyau, est encastré dans la mortaise 100Ddm usinée dans le bourrelet 100Dd sur la face intrados du noyau 100. On prévoit de colmater avec un matériau approprié, une colle céramique, l'espace résiduel qui existe entre les deux épaulements situés de part et d'autre du tenon 300dt, et la face inférieure du bourrelet 100Dd. Il existe éventuellement aussi des jours entre le tenon 300dt et les bords de la mortaise 100Ddm, qu'il s'agit de colmater.

On voit, sur cette figure, aussi l'espace résiduel entre l'épaulement du sommet de la branche 200a, qui vient en appui contre la face inférieure du bourrelet 100Da sur la face extrados du noyau.

Cette disposition présente un avantage supplémentaire concernant le sommet de l'aube. On peut ménager la sortie du noyau central dans la baignoire de telle façon que sa surface soit faible. Il s'ensuit que l'on évite les problèmes liés à l'effondrement éventuel de la plaquette constituant le fond de la baignoire et fermant le circuit de refroidissement.

En évitant également la formation de bavures, on assure un écoulement optimal à l'intérieur du circuit sans perte de charge.

On voit sur la figure 10, l'assemblage complet avec tous les éléments de noyau, vu de dessus et du côté intrados. On y retrouve les noyaux correspondant aux cavités 50 et 60 de la figure 2

On a décrit l'invention en relation avec l'exemple de réalisation d'un circuit de refroidissement tel qu'illustré sur la figure 2, mais l'invention ne se limite pas à cette réalisation, elle s'applique à l'assemblage en général de noyaux pour la formation d'un circuit de fluide à l'intérieur d'une aube.

## Revendications

1. Procédé de fabrication d'une aube de turbomachine selon la technique de moulage à cire perdue, l'aube comprenant une première cavité longitudinale (34) et au moins une deuxième cavité longitudinale (30) formant ensemble un circuit de refroidissement et communiquant entre elles à une extrémité longitudinale de l'aube par un canal transversal, le procédé comprenant l'étape de fabrication d'un premier (100) et d'un deuxième (200) noyaux correspondant auxdites cavités (34, 30), les deux noyaux comportant chacun une portion d'extrémité par laquelle ils sont reliés l'un à l'autre, l'assemblage des deux noyaux étant ensuite mis en place dans un moule carapace et le métal coulé dans ledit moule, **caractérisé par le fait que** les dites portions d'extrémités sont liées l'une à l'autre par un assemblage de type tenon (200at, 200bt, 200ct) et mortaise (100Dam, 100Dbm, 100Dcm).

2. Procédé selon la revendication 1, dans lequel on colmate, le cas échéant, les espaces résiduels, entre les dites portions d'extrémité une fois assemblées, qui sont susceptibles d'engendrer des bavures de métal coulé.

3. Procédé selon l'une des revendications 1 et 2, dans lequel la mortaise (100Dam, 100Dbm, 100Dcm) est formée par usinage dans la portion d'extrémité du premier noyau (100).

4. Procédé selon la revendication précédente dans lequel on usine un tenon (200at, 200bt, 200ct) dans la portion d'extrémité du deuxième noyau (200a, 200b, 200c), correspondant à ladite mortaise (100Dam, 100Dbm, 100Dcm) du premier noyau (100).

5. Procédé selon l'une des revendications précédentes, l'aube comportant au moins une troisième cavité longitudinale (32), le procédé comprenant l'étape de fabrication d'un troisième noyau (300) correspondant à la dite troisième cavité et comporte au moins un tenon pour un assemblage de type tenon et mortaise et une étape de placement des deuxième (200) et troisième (300) noyaux avec glissement des tenons dans les mortaises qui leur sont associées de manière à ce que les dites deuxième (30) et troisième (32) cavités correspondantes sont disposées l'une entre la première cavité, formant une cavité centrale, et la face extrados et l'autre entre la première cavité et la face intrados de la pale.

6. Procédé selon la revendication précédente dont au moins l'une des deuxième (30) et troisième (32) cavités est constituée d'au moins deux cavités longitudinales parallèles (30a, 30b, 30c ; 32d, 32e) formant deux portions parallèles du circuit de refroidissement, dans lequel les étapes de fabrication des deuxième (200) et troisième (300) noyaux sont réalisées de manière à comprendre un nombre de branches parallèles (200a, 200b, 200c ; 300d, 300e) identique au nombre de cavités parallèles.

7. Procédé selon l'une des revendications précédentes 1 à 6, dans lequel l'étape de fabrication des noyaux est réalisée de manière à ce que les cavités communiquent entre elles par leur extrémité située du côté du sommet de l'aube.

8. Assemblage de noyaux pour la mise en oeuvre du procédé selon l'une des revendications 1 à 7 dont les différents noyaux sont reliés entre eux par des tenons et des mortaises à une extrémité, et comportent à leur autre extrémité des moyens pour le montage dans un moule.

## Claims

1. A process for manufacturing the blade of a turbomachine using the lost-wax moulding technique, where the blade includes a first longitudinal cavity (34), central in particular, and at least a second longitudinal cavity (30), together forming a cooling circuit and communicating with each other at one longitudinal end of the blade via a transverse channel, where the process includes the manufacturing stage of first (100) and second (200) cores corresponding to the said cavities (34, 30), where the two cores each have an end portion, by which they are connected together, and where the assembly of the two cores is then positioned in a shell mould, and the metal poured into the said mould, **characterised by** the fact that the said end portions, are connected together by an assembly of the mortise (100Dam, 100Dbm, 100Dcm) and tenon (200at, 200bt, 200ct) type.

2. A process according to claim 1 in which, where necessary, the residual spaces between the said end portions, when assembled, which are liable to give rise to flashings on the poured metal, are plugged

3. A process according to claim 1, in which the mortise (100Dam, 100Dbm, 100Dcm) is formed by machining the end portion of the first central core (100).

4. A process according to claim 3 in which a tenon (200at, 200bt, 200ct) is machined in the end portion of the second core (200a, 200b, 200c), corresponding to the said mortise of the first core (100).

5. A process according to claim 1, where the blade includes at least a third longitudinal cavity (32), where the process includes the manufacturing stage of a third core (300) corresponding to the said third cavity, and comprises at least one tenon for an assembly of the mortise and tenon type and a stage of placing second (100) and third (300) cores with introduction of the tenons in the mortises as assoiated so that the said second (30) and third cavities (32) are located with one between the central cavity and the upper blade surface and the other between the central cavity and the lower blade surface.

6. A process according to claim 5, in which at least one of the second (30) and third (32) cavities is composed of at least two parallel longitudinal cavities (30a, 30b, 30c ; 32d, 32e), forming two parallel portions of the cooling circuit, in which the stages of manufacturing second (200) and third (300) cores are realized in a way to include a number of parallel branches (200a, 200b, 200c ; 300d, 300e) identical to the number of parallel cavities.

7. A process according to claim 1, where the cavities communicate with each other by their ends located beside the tip of the blade.

8. The assembly of cores for the implementation of the process according to one of the preceding claims, where the different cores are connected together at one end and include, at their other end, the means for mounting in a mould.

## Patentansprüche

1. Verfahren zur Herstellung einer Turbinenschaufel mit der Technik des Wachsformens mit verlorener Form, wobei die Schaufel einen ersten Längshohlraum (34) und mindestens einen zweiten Längshohlraum (30) enthält, die zusammen einen Kühlkreis bilden und an einem Ende in Längsrichtung der Schaufel durch einen quer verlaufenden Kanal miteinander in Verbindung stehen, wobei das Verfahren den Verfahrensschritt der Fertigung eines ersten Kerns (100) und eines zweiten Kerns (200) umfasst, welche den genannten Hohlräumen (34, 30) entsprechen, wobei die beiden Kerne jeweils einen Endabschnitt aufweisen, durch den sie miteinander verbunden sind, wobei die Gesamtanordnung der beiden Kerne anschließend in eine Formmaske und das in diese Form gegossene Metall eingesetzt werden,
**dadurch gekennzeichnet,**
**dass** die genannten Endabschnitte durch eine Zusammenbauanordnung mit Zapfen (200at, 200bt, 200ct) und Nut (100Dam, 100Dbm, 100Dcm) miteinander verbunden sind.

2. Verfahren nach Anspruch 1, bei dem ggf. zwischen diesen Endabschnitten nach deren Zusammenbau übrig bleibende Zwischenräume, die Grate des gegossenen Metalls bewirken können, abgedichtet werden.

3. Verfahren nach einem der Ansprüche 1 und 2, bei dem die Nut (100Dam, 100Dbm, 100Dcm) durch Bearbeitung aus dem Endabschnitt des ersten Kerns (100) gebildet wird.

4. Verfahren nach dem vorherigen Anspruch, bei dem durch Bearbeitung aus dem Endabschnitt des zweiten Kerns (200) ein Zapfen (200at, 200bt, 200ct) gebildet wird, der dieser Nut (100Dam, 100Dbm, 100Dcm) des ersten Kerns (100) entspricht.

5. Verfahren nach einem der vorherigen Ansprüche, wobei die Schaufel mindestens einen dritten Längshohlraum (32) enthält, wobei das Verfahren den Verfahrensschritt der Fertigung eines dritten Kerns (300) umfasst, welcher dem dritten Hohlraum entspricht und mindestens einen Zapfen für eine Zusammenbauanordnung mit Zapfen und Nut aufweist, sowie einen Verfahrensschritt des Einsetzens des zweiten Kerns (200) und dritten Kerns (300) unter Gleiten der Zapfen in den ihnen zugeordneten Nuten, so dass der entsprechende zweite Hohlraum (30) und dritte Hohlraum (32) zwischen dem ersten Hohlraum, der einen zentralen Hohlraum bildet, und der Saugseite bzw. zwischen dem ersten Hohlraum und der Druckseite des Schaufelblatts angeordnet sind.

6. Verfahren nach dem vorherigen Anspruch, wobei mindestens einer des zweiten und dritten Hohlraums (30, 32), von mindestens zwei parallel verlaufenden Längshohlräumen (30a, 30b, 30c; 32d, 32e) gebildet wird, die zwei parallele Abschnitte des Kühlkreislaufs bilden, wobei die Verfahrensschritte der Fertigung des zweiten Kerns (200) und des dritten Kerns (300) dergestalt ausgeführt werden, dass sie eine Anzahl von parallel verlaufenden Schenkeln (200a, 200b, 200c; 300d, 300e) aufweisen, die gleich der Anzahl parallel verlaufender Hohlräume ist.

7. Verfahren nach einem der vorherigen Ansprüche 1 bis 6, bei dem der Verfahrensschritt der Fertigung der Kerne dergestalt ausgeführt wird, dass die Hohlräume durch ihr zur Schaufelspitze hin gelegenes Ende miteinander kommunizieren.

8. Gesamtanordnung von Kernen für die Durchführung des Verfahrens nach einem der Ansprüche 1 bis 7, wobei die einzelnen Kerne an einem Ende durch Zapfen und Nuten miteinander verbunden sind und an ihrem anderen Ende Mittel zum Einsetzen in eine Gießform aufweisen.
